# EUROPEAN PATENT SPECIFICATION

(11) **EP 2 744 326 B1**
(45) Date of publication and mention of the grant of the patent: **29.04.2015**
(21) Application number: 12750865.3
(22) Date of filing: 09.08.2012
(51) Int. Cl.: A01K 39/01

(54) **FEEDING DEVICE AND METHOD FOR FEEDING POULTRY, SUCH AS COCKS, AND POULTRY HOUSE PROVIDED WITH SUCH A FEEDING DEVICE**
VERFAHREN UND VORRICHTUNG ZUM FÜTTERN VON GEFLÜGEL, Z. B. HÄHNEN, UND HÜHNERSTALL MIT EINER SOLCHEN VORRICHTUNG
DISPOSITIF D'ALIMENTATION ET PROCÉDÉ D'ALIMENTATION DE VOLAILLE, TELS QUE DES COQS, ET POULAILLER ÉQUIPÉ D'UN TEL DISPOSITIF D'ALIMENTATION

(30) Priority: 19.08.2011 NL 2007284
(43) Date of publication of application: 25.06.2014
(73) Proprietor: VDL Agrotech, 5652 AW Eindhoven (NL)
(72) Inventor: BENIERS, Marinus Lambertus Maria, NL-5694 AP Breugel (NL)
(74) Representative: Algemeen Octrooi- en Merkenbureau B.V.
(86) International application number: PCT/NL2012/050551
(87) International publication number: WO 2013/028067

(56) References cited:
- DE-U1- 20 112 364
- US-A- 4 153 010

## Description

The present invention relates to a feeding device for poultry, such as cocks.

The present invention also relates to a poultry house provided with a feeding device according to the invention, and to a method for feeding poultry, such as cocks.

A known feeding device for cocks comprises a substantially V-shaped feed trough, in which a feeder screw is integrated on the bottom thereof, i.e. in this case in the rounded point of the V-shape. Feed is deposited in the feed trough from an end thereof, and the feed is conveyed through the feed trough by rotatably driving the feeder screw. The feed trough thus fills from the upstream end. Once the feed trough is filled along its entire length, it is lowered into the poultry house from a higher position to a position in which cocks can feed from the feed trough. A drawback of this is that it is not possible to set the amount of feed being presented. In addition, cocks feed more quickly than desired from such a known system, because they can scoop up the feed with their beaks from the spaces between the screw blades, as it were.

Another known feeding device for poultry comprises a feed conveyor tube with a C-shaped feed trough provided some distance thereunder. By adjusting the available space between the feed conveyor tube and an upper edge of the feed trough by fixing the feed conveyor tube in a position a little higher or a little less high above the feed trough it is achieved that cocks, for example, cannot stick their heads through the available space due to the presence of the comb, whereas hens can, so that only hens can feed from the feed trough.

US 4,153,010 discloses a device for feeding animals, having a feed trough that is vertically movable between a lower feeding position and an upper loading position in which the bottom of the trough engages flanges of a dispensing channel.

Accordingly it is an object of the present invention to provide a feeding device for poultry, such as cocks, wherein the amount of feed being presented is adjustable, which amount can be kept uniform along the length of the feed trough more easily, and by which, in addition, an improved feeding behaviour of cocks can be realised.

The above object is achieved with the feeding device according to the present invention, comprising an elongate feed conveying element having at least a bottom wall, a feed trough provided thereunder and parallel thereto, which is provided with a bottom, upright side walls and an at least partially open upper side, and moving means for moving the feed conveying element and the feed trough with respect to each other between a closed position, in which the feed conveying element closes the open upper side of the feed trough at least substantially to poultry, and a feeding position, in which the feed conveying element is spaced from the feed trough by a distance such that the inner space of the feed trough is accessible to the poultry, wherein the feed conveying element is provided with at least one passage for feed in its bottom wall, seen in its longitudinal direction, and wherein the feeding device further comprises feed conveying means for conveying feed through the feed conveying element to said at least one passage, and adjusting means for adjusting the spacing between the feed conveying element and the bottom of the feed trough in the closed position, wherein the adjusting means comprise a number of spacers each having a supporting surface for supporting the feed conveying element, wherein the spacing between the supporting surface and the bottom of the feed trough is adjustable for adjusting the spacing between the feed conveying element and the bottom of the feed trough at the location of each spacer.

An advantage of the feeding device according to the present invention is that by using the adjusting means, the feed trough can be filled with feed in the closed position, with the spacing between the bottom of the feed trough and the feed conveying element determining the amount of feed that can flow from said at least one passage into the feed trough. As a result, the amount of feed being presented can be set in a simple manner along the entire length of the feed trough, and thus be geared to, for example, the type of feed, the type of poultry and the age of the poultry. In addition, because the feed conveying element and the feed trough are spaced from each other in the feeding position, the feed can spread through the feed trough much more easily in the feeding position, and experiments have shown that poultry must make a greater effort in picking up the feed, thus being occupied with doing so for a longer period of time. This will lead to more peace and quiet among the poultry while feeding, and thus to less stress, which is very advantageous.

The aforesaid adjustment of the spacing between the supporting surface and the bottom of the feed trough, using spacers, may for example take place by exchanging a spacer provided on the bottom for a spacer having a higher or a lower supporting surface, or, for example, by fixing a spacer connected to the feed trough in a higher or lower position above the bottom.

Alternatively, the adjusting means may form part of the moving means, in which case the moving means are also designed to block movement with respect to each other of the feed conveying element and the feed trough in the closed position, with a predetermined spacing therebetween, for thus setting the aforesaid spacing in the closed position. This can take place manually or automatically, in which latter case a control unit may be provided into which said spacing can be input.

Preferably, the feed trough is provided with spaced-apart suspension elements along its length for suspending the feed trough in a poultry house. As a result, the floor surface of the poultry house can remain clear.

In a constructionally simple preferred embodiment, spacers are connected to a respective suspension element. Preferably, each suspension element is provided with a spacer.

It is advantageous if suspension elements are plate-shaped, wherein the plate surface extends transversely to the longitudinal direction of the feed trough, wherein a slot oriented transversely to the bottom of the feed trough is provided in the plate surface, which slot is adapted to the geometry of the feed conveying element, wherein the feed conveying element extends through slots of suspension elements and wherein the feed conveying element abuts against ends of the slots located near the bottom of the feed trough or against the spacers in the closed position. By using the slot in the plate-shaped suspension elements, a guide for the feed conveying elements is realised in an effective manner. The aforesaid ends of the slots can function as end stops. It is advantageous if the feed conveying element is provided directly above the feed trough and if the feed trough and the feed conveying element are movable in vertical direction with respect to each other in use.

The setting of the spacing can be changed in an efficient and simple manner if the spacers are each connected to the associated suspension element, or at least to the feed trough, by means of a connection that can be adjusted in steps.

In a practical embodiment, suspension elements are provided at intervals of 2 - 4 m, preferably about 3 m, along the length of the feed trough.

Preferably, the feed trough can be moved away from and towards the feed conveying element by means of the moving means. By thus moving the feed trough upward in use, it is automatically achieved that poultry will withdraw from the feed trough, so that the risk of poultry getting jammed between the feed trough and the feed conveying element will be zero. It is advantageous in this regard if the moving means are designed to lift the feed trough by the suspension elements of the feed trough in the direction of the feed conveying element for moving the feed trough from the feeding position to the closing position. As only the feed trough needs to be moved, in contrast to the feed conveying element, the moving means: can be of simple and light construction, which is advantageous for cost price reasons.

In a very advantageous preferred embodiment, the bottom wall of the feed conveying element forms part of an at least substantially closed circumferential wall. Although the circumferential wall need not be fully closed at the upper side, this is preferred. The feed conveying element will be tubular in shape in that case. Consequently, the feed conveying element is preferably a feed conveyor tube. In the case of a partially open upper side of the feed conveying element, a cover element, for example in the form of a grate and/or and anti-perching element may be provided in order to prevent poultry from feeding directly from the feed conveying element. Also in the case that the feed conveyor tube is used, it is advantageous if an anti-perching element is provided on the feed conveyor tube, which element is preferably made of metal wire and which preferably extends along the entire length of the tube. In this way the animals are prevented from perching on the tube and fouling the feed trough.

It is furthermore advantageous if the feed conveying element is provided with further suspension elements for suspending the feed conveying element in a poultry house.

In a very advantageous preferred embodiment, the bottom of the feed trough is at least substantially flat. In this way it is to a great extent achieved that the feed will spread over the feed trough in the feeding position while the poultry are eating. This stimulates the feeding behaviour of the poultry, since the poultry will need more time to eat the feed because the feed has spread. As a result, there will be more peace and quiet during feeding, and less stress, which is very advantageous.

In an advantageous embodiment, the spacing between the feed conveying element and the bottom of the feed trough in the closed position is adjustable in the range from 5 to 75 mm, preferably from 10 to 55 mm.

It is furthermore advantageous if the feeding device is further provided with feed supplying means for introducing feed into the feed conveying element at the location of an end of the feed conveying element, wherein the feed conveying means are designed to convey feed from said end through the feed conveying element.

It is furthermore advantageous if the feed conveying means comprise a feed conveyor which extends within the feed conveying element for conveying feed through the feed conveying element to said at least one passage, wherein the feed conveyor preferably comprises a feed conveyor screw.

To obtain an adequate distribution of feed along the length of the feed trough, it is advantageous if said at least one passage comprises a number of separate openings, which are provided in the bottom wall of the feed conveying element at intervals ranging between 0.05 and 0.5 m.

The present invention further relates to a poultry house provided with at least one feeding device according to the present invention.

In an advantageous configuration of the poultry house, the feed trough of said at least one feeding device extends along a wall of the poultry house, wherein the feed trough can be approached by poultry from one longitudinal side of the feed trough, at least in the feeding position, wherein at least one further feeding device for poultry is disposed spaced from said at least one feeding device, wherein said at least one feeding device and said at least one further feeding device are separate by a space where the poultry can stay.

It is advantageous if said at least one feeding device is designed to feed cocks and said at least one further feeding device is designed to feed hens, in particular broiler dams. This can be realised by adapting the height relative to the floor surface of the feed trough in the feeding position to the animal intended to feed from said feeding device.

The present invention also relates to a method for using a feeding device according to the present invention, comprising the successive steps of:
a) conveying feed through the feed conveying element in the closed position by means of the feed conveying means, such that feed will flow out of the feed conveying elements at the location of said at least one passage and will land on the bottom of the feed trough,
b) moving the feeding device to the feeding position after the conveying action has been stopped by moving the feed trough and the feed conveying element with respect to each other,
c) allowing poultry to eat said feed,
d) moving the feeding device to the closed position by moving the feed trough and the feed conveying element with respect to each other, and
e) repeating steps a) through d).

The above-described method according to the invention can also be used with a feeding device that is similar to the feeding device according to the invention but which does not comprise any adjusting means for adjusting the spacing between the feed conveying element and the bottom of the feed trough in the closed position.

When after some time the animals have grown, for example, and exhibit a different feeding requirement, or when a different type of poultry is introduced into the poultry house, it is advantageous to change the setting of the spacing between the feed conveying element and the bottom of the feed trough between two successive steps d) by means of the adjusting means.

Advantages of the poultry house and the method according to the invention are analogous to the above-described advantages of the feeding device according to the invention.

The present invention will now be explained in more detail by means of a description of a preferred embodiment of a feeding device according to the invention with reference to the following figures, in which:
Figure 1 is a three-dimensional view of a part of a preferred embodiment of a feeding device according to the invention;
Figure 2a is a side view of the part of the feeding device shown in figure 1;
Figure 2b is a cross-sectional view along the line IIb-IIb in figure 2a;
Figure 3a is a view of the feeding device shown in figure 2a in another working position thereof;
Figure 3b is a cross-sectional view along the line IIIb-IIIb in figure 3a;
Figure 4a is a view of the feeding device shown in figure 2a in yet another working position thereof; and
Figure 4b is a cross-sectional view along the line IVb-IVb in figure 4a.

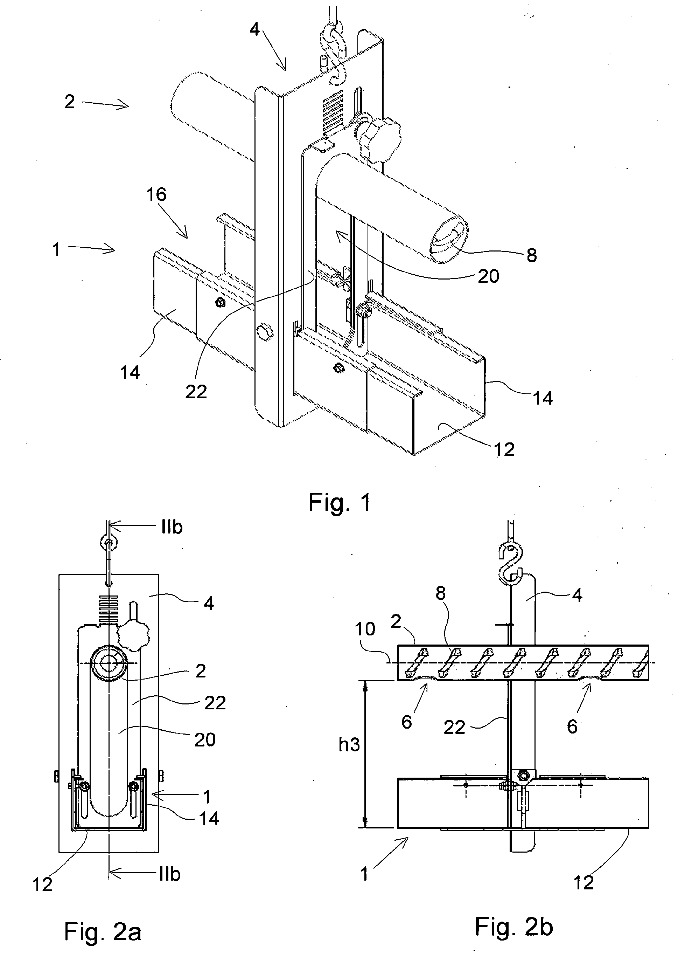

The feeding system shown in the figures comprises a feed trough 1', which is at least partially shown in figure 1, and a feed conveyor tube 2 (partially shown) forming an elongate feed conveying element, which is provided parallel to and directly above the feed trough. The feed trough 1 and also the feed conveyor tube 2 extend over (usually) dozens of metres in a poultry house (not shown). The feed conveyor tube 2 has a fully closed circumferential wall, although this is not essential to the invention. The feed conveying element may be open at the upper side, although this is not preferred. The feed conveyor tube 2 is suspended in the poultry house at 3 m intervals, and the feed trough 1 is likewise suspended in the poultry house at 3 m intervals, but staggered 1.5 m relative to the feed conveyor tube, by means of suspension elements. In figure 1 one suspension element 4 is shown, which is attached to the feed trough 1 and from which the feed trough 1 is suspended. The feeding device comprises moving means for moving the feed trough 1 and the feed conveyor tube 2 with respect to each other. Said moving means are made up of a winch construction in the suspension of the feed trough 1 and a winch construction in the suspension of the feed conveyor tube 2, by means of which a constant height of the feed conveyor tube 2 (in the poultry house) can be maintained and by means of which the height of the feed trough can be varied, as will be explained in more detail hereinafter. Said suspension provided with a winch construction is not shown in detail in the figures. Within this framework it is advantageous if the height in the poultry house of the combination of feed trough 1 and feed conveyor tube 2 can also be varied. This is relevant in particular to the feeding position, to be described in more detail hereinafter, of the device. If cocks as well as hens as well as broiler dams are present in the poultry house in which the feeding device is installed, and if the feed trough 1 is suspended at a relatively small height in the poultry house, all the animals will be able to feed from the feed trough 1, which may be undesirable, since cocks need a different kind of feed and/or a different amount of feed than the hens. It is important in this regard that the amount of feed be geared to the type of poultry. If the height of the feed trough 1 is slightly higher in the feeding position, such that it is just out of reach of hens, the cocks, on the other hand, can still feed from it, since cocks are generally taller. The feed for the hens can in that case be provided by means of a further feeding device.

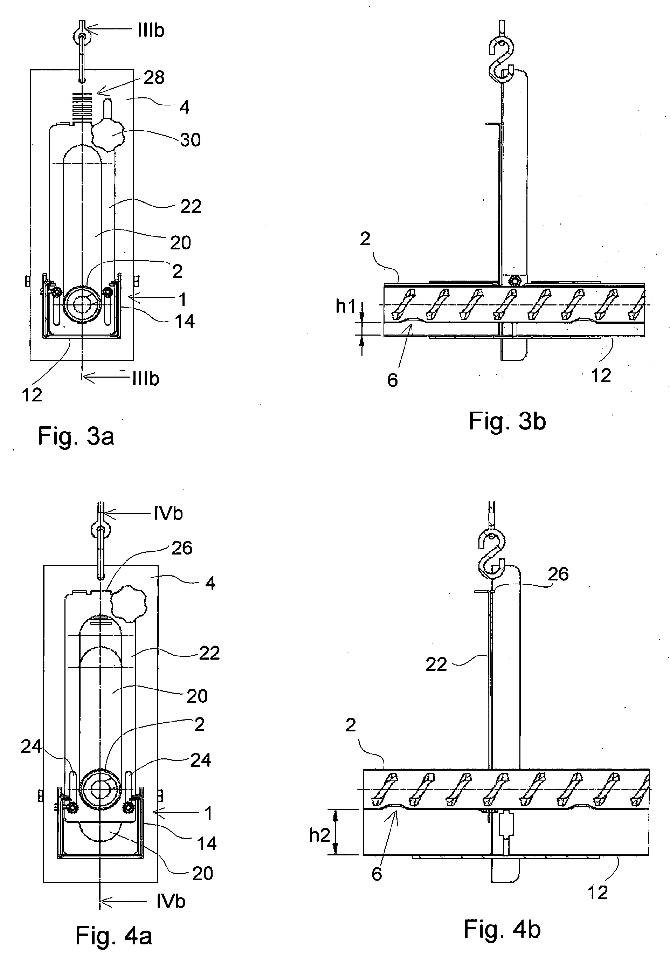

The suspension elements 4, which are plate-shaped, are attached to the feed trough 1. The plate surface is oriented transversely to the longitudinal direction of the feed trough 1 and in said plate surface a slot 20 extends upwards transversely to the plane of the bottom 12 of the feed trough 1. The geometry of the slot 20 is adapted to the diameter of the feed conveyor tube 2. The feed conveyor tube 2 can move through the slot 20 from a feeding position shown in figures 2a and 2b, in which the tube 2 abuts against the end of the slot 20 remote from the feed trough 1, or in which the tube 2 is positioned at least higher in the slot 2, and a closed position shown in figures 3a and 3b, in which the feed conveyor tube 2 abuts against the end of the slot 20 located near the bottom 12 (which lower end thus functions as a stop for the tube 2). The position shown in figures 3a and 3b of the feed conveyor tube 2 relative to the feed trough 1 is the extreme position, in which the distance h1 between the tube 2 and the bottom 12 is smallest.

Each of the suspension elements 4 also comprises a spacer 22, which spacers function as adjusting means for adjusting the distance h1, h2 between the tube 2 and the trough 1. The spacer 22 is also plate-shaped and abuts against the plate surface of the spacer 4. The spacer 22 is provided with a slot corresponding to the slot 20. In the extreme position shown in figures 3a and 3b, the two slots register exactly. In figures 4a and 4b, however, the spacer has been moved a predetermined distance upward, i.e. away from the feed trough. As a result, the end of the slot in the spacer that is located near the feed trough forms a stop for the feed conveyor tube 2, and the distance h2 between the tube 2 and the bottom 12 in the closed position is thus increased in comparison with the situation shown in figures 3a and 3b. The spacer 22 has two further slots 24, parallel to the slot for the tube 2, which fit over pins in the suspension element 4, thus forming a guide for the spacer 22. At the upper side of the spacer 22 a lip 26 facing towards the plate surface of the suspension element is provided, which lip, in use, fits into one of the series of grooves 28 in the spacer adapted to accommodate said lip. Using a fixation screw 30 provided with a rotary knob on its head, the spacer can be placed into one of the grooves 28 with its lip 26 after said screw has been slightly loosened. When subsequently the screw is tightened, the position of the spacer 22 relative to the suspension element 4 is fixed, and thus also the smallest possible spacing between the tube 2 and the feed trough 1 determined by the lower end of the slot in the spacer in the closed position is fixed. Thus, the spacing between the tube 2 and the feed trough 1 can be variably set by the adjusting means in the closed position.

The feed conveyor tube 2 is a hollow tube, in which a number of spaced-apart openings 6 for feed are provided, distributed over the length thereof, in the bottom side of the wall of the tube 2. The openings may also be provided in a slightly higher part of the wall of the tube 2, as long as they are directed toward the feed trough in the closed position. Alternatively, a long, narrow slot or a number of spaced-apart slots may be provided as (a) passage(s) in the bottom wall of the tube 2 that forms the feed conveying element. The openings 6 are spaced about 20 cm apart. See also figure 2b. Disposed within the feed conveyor tube 2 is a known conveyor screw 8, which extends along the length of the feed conveyor tube and which can be rotatably driven about the central axis 10 of the feed conveyor tube by drive means (not shown). By introducing feed into the feed conveyor tube 2 at the location of an upstream end thereof, using feed supplying means, and driving the conveyor screw 8, feed can be conveyed through the feed conveyor tube 2. At the location of the openings, the feed flows out of the feed conveyor tube and drops into the feed trough 1. Alternatively, a known tube conveyor chain provided with carriers could be used instead of the feed conveyor screw 8.

As is shown in particular in figure 2a, the feed trough 1 is substantially C-shaped with a flat bottom 12 and upright side walls 14 on the longitudinal sides, which side walls are flanged at the free ends thereof. The bottom 12 and the side walls 14 define an inner space 16 of the feed trough 1. The width of the feed trough 1 is adapted to the diameter of the feed conveyor tube 2, so that the feed conveyor tube 2 can extend at least in part to within the feed trough 2.

In figures 1, 2a and 2b the feeding position is shown. In this position the feed trough 1 and the feed conveyor tube 2 are spaced a distance h3 apart, such that sufficient space remains for the poultry, such as cocks, to reach with their heads between the feed trough 1 and the feed conveyor tube 2 so as to feed from the feed trough 1 feed that is present therein. Preferably, the spacing between an upper free end of a side wall 14 of the feed trough 1 and the feed conveyor tube is at least about 10 cm. Because the interior of the feed trough 1 is clear in the feeding position, i.e. the feed conveying tube 2 is spaced from the feed trough 1 by a distance h3, the feed can to a great extend spread freely over the bottom 12 of the feed trough 1. This stimulates the feeding behaviour of the poultry, in the sense that the poultry must make an effort to get to the feed, i.e. the grains (in most cases) must be picked up one by one. Because the bottom 12 is flat, the spreading of feed is realised to an even greater extent.

Figures 3a and 3b show the feeding device in the closed position. In the closed position, the feed trough 1 has been lifted so far in the direction of the feed conveyor tube 2 that the feed conveyor tube reaches within the feed trough 1, thus effectively closing the interior space of the feed trough 1, i.e. rendering it inaccessible to poultry. In the example shown in figures 3a and 3b, the underside of the feed conveyor tube 2 is spaced from the bottom of the feed trough 1 by a distance h1 in the closed position. When feed is conveyed through the feed conveyor tube 2 as described above, a limited (and predetermined) amount of feed can flow from the feed conveyor tube 2 at every opening 6. As a result, a small pile of feed forms under each opening 6. The moment the top of a pile of feed touches the associated opening 6, no feed can flow out of the feed conveyor tube 2 at said opening any longer and the feed present in the tube 2 is conveyed past the opening 6 in question toward openings 6 located further downstream, until the moment a pile of feed is present under all openings 6. At that point the conveying action is stopped and the filling of the feed trough is complete.

Figures 4a and 4b show the feeding device, likewise in the closed position, but in this case the distance h2 between the underside of the feed conveyor tube 2 and the bottom 12 of the feed trough 1 is greater than in the situation shown in figures 3a and 3b, because the spacer 2 has been moved upwards as explained in detail in the foregoing. Also in this case the feed conveyor tube 2 is still partially disposed in the feed trough 1, thus at least substantially closing the inner space of the feed trough 1. Because of the greater distance h2, a larger pile can form under each opening 6 than is the case with the distance h1 shown in figures 3a and 3b and described above. The closed position is thus in fact a position which is variable to some extent, in which position the feed conveyor tube reaches within the feed trough 1 in such a manner as to effectively close the interior space of the feed trough 1.

In use, operating the feeding device takes place in the following manner. The starting position is the feeding position shown in figures 2a and 2b. If desired, the setting of the spacers 22 can be changed, for example if the amount, the type or the composition of the feed is changed, or if a different type of poultry is present in the poultry house. In the case of young animals, the amount of feed may be gradually built up over time, for example, geared to the growth of the animals. In the case of fully-grown animals, the amount of feed can be adjusted if an undesirable weight increase or decrease of the animals is observed. If desired, the joint height of the feed conveyor tube 2 and the feed trough 1 in the poultry house can be adjusted as explained above. Subsequently, the feed trough 1 is lifted in the direction of the feed conveyor tube 2. While this is taking place, the tube 2 moves through the slot 20 and comes to abut against the lower end of the slot in the space 22 in the predetermined closed position shown in figures 3a-4b. The distance between the underside of the tube 2 and the bottom 12 of the feed trough, 1 is thus determined. Subsequently, feed is introduced into the feed conveyor tube 2 by feed supplying means and the conveyor screw 8 is driven. After some time, a pile of feed is present under all the openings 6 in the tube 2, with the amount of feed of each pile depending on the setting of the spacers 22. Subsequently, the feed trough 1 is lowered to the feeding position shown in figures 2a and 2b, after which the poultry can eat the feed from the feed trough 1.

## Claims

1. A feeding device for poultry, such as cocks, comprising an elongate feed conveying element (2) having at least a bottom wall, a feed trough (1) provided thereunder and parallel thereto, which is provided with a bottom (12), upright side walls (14) and an at least partially open upper side, and moving means for moving the feed conveying element (2) and the feed trough (1) with respect to each other between a closed position, in which the feed conveying element (2) closes the open upper side of the feed trough (1) at least substantially to poultry, and a feeding position, in which the feed conveying element (2) is spaced from the feed trough (1) by a distance such that the inner space (16) of the feed trough (1) is accessible to the poultry, wherein the feed conveying element (2) is provided with at least one passage (6) for feed in its bottom wall, seen in its longitudinal direction, and wherein the feeding device further comprises feed conveying means (8) for conveying feed through the feed conveying element (2) to said at least one passage (6), and adjusting means (22) for adjusting the spacing between the feed conveying element (2) and the bottom of the feed trough (1) in the closed position, wherein the adjusting means comprise a number of spacers (22) each having a supporting surface for supporting the feed conveying element (2), wherein the spacing between said supporting surface and the bottom of the feed trough (12) is adjustable for adjusting the spacing between the feed conveying element (2) and the bottom of the feed trough (1) at the location of each spacer (22).

2. A feeding device according to claim 1, wherein the feed trough (1) is provided with spaced-apart suspension elements (4) along its length for suspending the feed trough (1) in a poultry house.

3. A feeding device according to claim 2, wherein spacers (22) are connected to a respective suspension element (4).

4. A feeding device according to claim 2 or 3, wherein suspension elements (4) are plate-shaped, wherein the plate surface extends transversely to the longitudinal direction of the feed trough (1), wherein a slot (20) oriented transversely to the bottom of the feed trough (1) is provided in the plate surface, which slot (20) is adapted to the geometry of the feed conveying element (2), wherein the feed conveying element (2) extends through slots (20) of suspension elements (4) and wherein the feed conveying element (2) abuts against ends of the slots (20) located near the bottom of the feed trough (1) or against the spacers (22) in the closed position.

5. A feeding device according to claim 3 or a dependent claim thereof, wherein the spacers (22) are each connected to the associated suspension element (4) by means of a connection (26, 28, 30) that can be adjusted in steps.

6. A feeding device according to claim 2 or a dependent claim thereof, wherein the moving means are designed to lift the feed trough (1) by the suspension elements (4) of the feed trough (1) in the direction of the feed conveying element (2) for moving the feed trough (1) from the feeding position to the closing position.

7. A feeding device according to any one of the preceding claims, wherein the feed conveying element (2) is provided with further suspension elements for suspending the feed conveying element in a poultry house.

8. A feeding device according to any one of the preceding claims, wherein the bottom (12) of the feed trough (1) is at least substantially flat.

9. A feeding device according to any one of the preceding claims, wherein the spacing between the feed conveying element (2) and the bottom (12) of the feed trough (1) in the closed position is adjustable in the range from 5 to 75 mm, preferably from 10 to 55 mm.

10. A feeding device according to any one of the preceding claims, wherein the feed conveying means (8) comprise a feed conveyor which extends along at least part of the length of the feed conveying element (2) for conveying feed through the feed conveying element (2) to said at least one passage (6), wherein the feed conveyor preferably comprises a feed conveyor screw (8).

11. A feeding device according to any one of the preceding claims, wherein said at least one passage (6) comprises a number of separate openings, which are provided in the bottom wall of the feed conveying element (2) at intervals ranging between 0.05 and 0.5 m.

12. A poultry house provided with at least one feeding device according to any one of the preceding claims.

13. A poultry house according to claim 12, wherein the feed trough (1) of said at least one feeding device extends along a wall of the poultry house, wherein the feed trough (1) can be approached by poultry from one longitudinal side of the feed trough, at least in the feeding position, wherein at least one further feeding device for poultry is disposed spaced from said at least one feeding device, wherein said at least one feeding device and said at least one further feeding device are separate by a space where the poultry can stay, wherein, preferably, said at least one feeding device is designed for feeding cocks and said at least one further feeding device is designed for feeding hens, in particular broiler dams.

14. A method for using a feeding device according to any one of claims 1-11, comprising the successive steps of:
a) conveying feed through the feed conveying element (2) in the closed position by means of the feed conveying means (8), such that feed will flow out of the feed conveying elements (2) at the location of said at least one passage (6) and will land on the bottom (12) of the feed trough (1),
b) moving the feeding device to the feeding position after the conveying action has been stopped by moving the feed trough (1) and the feed conveying element (2) with respect to each other,
c) allowing poultry to eat said feed,
d) moving the feeding device to the closed position by moving the feed trough (1) and the feed conveying element (2) with respect to each other, and
e) repeating steps a) through d).

15. A method according to claim 14, wherein the setting of the spacing between the feed conveying element (2) and the bottom of the feed trough (1) is changed between two successive steps d) by means of the adjusting means (22).

## Patentansprüche

1. Vorrichtung zum Füttern von Geflügel, zum Beispiel Hähnen, umfassend ein längliches Futterförderelement (2) mit wenigstens einer Bodenwand, einen darunter und parallel dazu vorgesehenen Futtertrog (1), der mit einem Boden (12), aufrechten Seitenwänden (14) und einer zumindest teilweise offenen Oberseite versehen ist, sowie Bewegungseinrichtungen zur Bewegung des Futterförderelements (2) und des Futtertrogs (1) relativ zueinander zwischen einer geschlossenen Position, in welcher das Futterförderelement (2) die offene Oberseite des Futtertrogs (1) zumindest im Wesentlichen für das Geflügel schließt, und einer Fütterposition, in welcher das Futterförderelement (2) in einem Abstand zum Futtertrog (1) derart platziert ist, dass der Innenraum (16) des Futtertrogs (1) für das Geflügel erreichbar ist, wobei das Futterförderelement (2) in seiner Längsrichtung gesehen mit zumindest einem Durchgang (6) für Futter in seiner Bodenwand versehen ist, und wobei die Vorrichtung zum Füttern zudem Futterfördereinrichtungen (8) zur Förderung von Futter durch das Futterförderelement (2) zu dem wenigstens einen Durchgang (6) umfasst, sowie Einstelleinrichtungen (22) zur Einstellung des Abstands zwischen dem Futterförderelement (2) und dem Boden des Futtertrogs (1) in der geschlossenen Position, wobei die Einstelleinrichtungen eine Anzahl von Abstandshaltern (22) umfassen, die jeweils eine Stützfläche zum Stützen des Futterförderelements (2) aufweisen, wobei der Abstand zwischen der Stützfläche und dem Boden des Futtertrogs (12) zur Einstellung des Abstands zwischen dem Futterförderelement (2) und dem Boden des Futtertrogs (1) am Ort jedes Abstandshalters (22) einstellbar ist.

2. Vorrichtung zum Füttern nach Anspruch 1, bei der der Futtertrog (1) entlang seiner Länge mit voneinander beabstandeten Aufhängungselementen (4) versehen ist, um den Futtertrog (1) in einem Geflügelstall aufzuhängen.

3. Vorrichtung zum Füttern nach Anspruch 2, bei der mit einem jeweiligen Aufhängungselement (4) Abstandshalter (22) verbunden sind.

4. Vorrichtung zum Füttern nach Anspruch 2 oder 3, bei der die Aufhängungselemente (4) plattenförmig sind, wobei die Plattenfläche sich quer zur Längsrichtung des Futtertrogs (1) erstreckt, wobei in der Plattenfläche ein quer zum Boden des Futtertrogs (1) ausgerichteter Schlitz (20) vorgesehen ist und der Schlitz (20) an die Geometrie des Futterförderelements (2) angepasst ist, wobei sich das Futterförderelement (2) durch Schlitze (20) des Aufhängungselements (4) erstreckt und wobei das Futterförderelement (2) an Enden der Schlitze (20), die sich in der Nähe des Bodens des Futtertrogs (1) befinden oder an die Abstandshalter (22) an der geschlossenen Position angrenzt.

5. Vorrichtung zum Füttern nach Anspruch 3 oder einem darauf rückbezogenen Anspruch, bei der die Abstandshalter (22) jeweils mit dem zugeordneten Aufhängungselement (4) mittels einer Verbindung (26, 28, 30) verbunden sind, welche stufenweise verstellt werden kann.

6. Vorrichtung zum Füttern nach Anspruch 2 oder einem darauf rückbezogenen Anspruch, bei der die Bewegungseinrichtungen dazu ausgelegt sind, den Futtertrog (1) mittels der Aufhängungselemente (4) des Futtertrogs (1) in Richtung des Futterförderelements (2) anzuheben, um den Futtertrog (1) aus der Fütterposition in die geschlossene Position zu bewegen.

7. Vorrichtung zum Füttern nach einem der vorhergehenden Ansprüche, bei der das Futterförderelement (2) mit weiteren Aufhängungselementen versehen ist, um das Futterförderelement in einem Geflügelstall aufzuhängen.

8. Vorrichtung zum Füttern nach einem der vorhergehenden Ansprüche, bei der der Boden (12) des Futtertrogs (1) zumindest im Wesentlichen flach ist.

9. Vorrichtung zum Füttern nach einem der vorhergehenden Ansprüche, bei der der Abstand zwischen dem Futterförderelement (2) und dem Boden (12) des Futtertrogs (1) in der geschlossenen Position im Bereich von 5 bis 75 mm, vorzugsweise von 10 bis 55 mm einstellbar ist.

10. Vorrichtung zum Füttern nach einem der vorhergehenden Ansprüche, bei der die Futterfördereinrichtungen (8) einen Futterförderer umfassen, der sich längs wenigstens eines Teils der Länge des Futterförderelements (2) erstreckt, zur Förderung von Futter durch das Futterförderelement (2) zu dem wenigstens einen Durchgang (6), wobei der Futterförderer vorzugsweise eine Futterförderschnecke (8) umfasst.

11. Vorrichtung zum Füttern nach einem der vorhergehenden Ansprüche, bei der wenigstens ein Durchgang (6) eine Anzahl von separaten Öffnungen umfasst, die in der Bodenwand des Futterförderelements (2) in Intervallen im Bereich zwischen 0,05 und 0,5 m vorgesehen sind.

12. Geflügelstall, der mit wenigstens einer Vorrichtung zum Füttern nach einem der vorhergehenden Ansprüche versehen ist.

13. Geflügelstall nach Anspruch 12, bei dem der Futtertrog (1) der wenigstens einen Vorrichtung zum Füttern sich entlang einer Wand des Geflügelstalls erstreckt, wobei Geflügel sich dem Futtertrog (1), zumindest in der Fütterposition, von einer Längsseite des Futtertrogs (1) her annähern kann, wobei zumindest eine weitere Vorrichtung zum Füttern von Geflügel in einem Abstand zu der wenigstens einen Vorrichtung zum Füttern angeordnet ist, wobei die wenigstens eine Vorrichtung zum Füttern und die wenigstens eine weitere Vorrichtung zum Füttern durch einen Raum getrennt sind, in welchem sich das Geflügel aufhalten kann, wobei vorzugsweise die wenigstens eine Vorrichtung zum Füttern dazu ausgelegt ist, Hähne zu füttern, und die wenigstens eine weitere Vorrichtung zum Füttern dazu ausgelegt ist, Hennen, insbesondere Zuchthennen zu füttern.

14. Verfahren zur Verwendung einer Vorrichtung zum Füttern nach einem der Ansprüche 1 bis 11, mit den aufeinanderfolgenden Schritten:
a) Fördern von Futter durch das Futterförderelement (2) in der geschlossenen Position mittels der Futterfördereinrichtungen (8), derart, dass Futter aus den Futterförderelementen (2) am Ort des wenigstens einen Durchgangs (6) herausströmt und auf dem Boden (12) des Futtertrogs (1) landet,
b) Bewegen der Vorrichtung zum Füttern in die Fütterposition, nachdem der Fördervorgang gestoppt worden ist, indem der Futtertrog (1) und das Futterförderelement (2) relativ zueinander bewegt werden,
c) Zulassen, dass Geflügel das Futter frisst,
d) Bewegen der Vorrichtung zum Füttern in die geschlossene Position, indem der Futtertrog (1) und das Futterförderelement (2) relativ zueinander bewegt werden, und
e) Wiederholen der Schritte a) bis d).

15. Verfahren nach Anspruch 14, bei dem die Einstellung des Abstands zwischen dem Futterförderelement (2) und dem Boden des Futtertrogs (1) zwischen zwei aufeinanderfolgenden Schritten d) mittels der Einstelleinrichtungen (22) verändert wird.

## Revendications

1. Dispositif d'alimentation pour volaille, tels que des coqs, comprenant un élément de transport d'alimentation allongé (2) ayant au moins une paroi inférieure, une goulotte d'alimentation (1) prévue au-dessous et parallèle à cette dernière, qui est prévue avec un fond (12), des parois latérales droites (14) et un côté supérieur au moins partiellement ouvert, et des moyens de déplacement pour déplacer l'élément de transport d'alimentation (2) et la goulotte d'alimentation (1) l'un par rapport à l'autre entre une position fermée dans laquelle l'élément de transport d'alimentation (2) ferme le côté supérieur ouvert de la goulotte d'alimentation (1) au moins sensiblement à la volaille, et une position d'alimentation dans laquelle l'élément de transport d'alimentation (2) est espacé de la goulotte d'alimentation (1) par une distance, de sorte que l'espace interne (16) de la goulotte d'alimentation (1) est accessible à la volaille, dans lequel l'élément de transport d'alimentation (2) est prévu avec au moins un passage (6) pour l'alimentation dans sa paroi inférieure, observé dans sa direction longitudinale, et dans lequel le dispositif d'alimentation comprend en outre des moyens de transport d'alimentation (8) pour transporter l'alimentation par le biais de l'élément de transport d'alimentation (2) jusqu'audit au moins un passage (6), et des moyens d'ajustement (22) pour ajuster l'espacement entre l'élément de transport d'alimentation (2) et le fond de la goulotte d'alimentation (1) dans la position fermée, dans lequel les moyens d'ajustement comprennent un certain nombre de dispositifs d'espacement (22) ayant chacun une surface de support pour supporter l'élément de transport d'alimentation (2), dans lequel l'espacement entre ladite surface de support et le fond de la goulotte d'alimentation (12) est ajustable pour ajuster l'espacement entre l'élément de transport d'alimentation (2) et le fond de la goulotte d'alimentation (1) à l'emplacement de chaque dispositif d'espacement (22).

2. Dispositif d'alimentation selon la revendication 1, dans lequel la goulotte d'alimentation (1) est prévue avec des éléments de suspension (4) espacés le long de sa longueur pour suspendre la goulotte d'alimentation (1) dans un poulailler.

3. Dispositif d'alimentation selon la revendication 2, dans lequel les dispositifs d'espacement (22) sont raccordés à un élément de suspension (4) respectif.

4. Dispositif d'alimentation selon la revendication 2 ou 3, dans lequel les éléments de suspension (4) sont en forme de plaque, dans lequel la surface de plaque s'étend de manière transversale par rapport à la direction longitudinale de la goulotte d'alimentation (1), dans lequel une fente (20) orientée de manière transversale par rapport au fond de la goulotte d'alimentation (1) est prévue dans la surface de plaque, laquelle fente (20) est adaptée à la géométrie de l'élément de transport d'alimentation (2), dans lequel 1"élément de transport d'alimentation (2) s'étend à travers des fentes (20) des éléments de suspension (4) et dans lequel l'élément de transport d'alimentation (2) vient en butée contre des extrémités des fentes (20) positionnées à proximité du fond de la goulotte d'alimentation (1) ou contre les dispositifs d'espacement (22) dans la position fermée.

5. Dispositif d'alimentation selon la revendication 3 ou une revendication dépendante, dans lequel les dispositifs d'espacement (22) sont chacun raccordés à l'élément de suspension (4) associé au moyen d'un raccordement (26, 28, 30) qui peut être ajusté par paliers.

6. Dispositif d'alimentation selon la revendication 2 ou sa revendication dépendante, dans lequel les moyens de déplacement sont conçus pour lever la goulotte d'alimentation (1) par les éléments de suspension (4) de la goulotte d'alimentation (1) dans la direction de l'élément de transport d'alimentation (2) pour faire passer la goulotte d'alimentation (1) de la position d'alimentation à la position de fermeture.

7. Dispositif d'alimentation selon l'une quelconque des revendications précédentes, dans lequel l'élément de transport d'alimentation (2) est prévu avec d'autres éléments de suspension pour suspendre l'élément de transport d'alimentation dans un poulailler.

8. Dispositif d'alimentation selon l'une quelconque des revendications précédentes, dans lequel le fond (12) de la goulotte d'alimentation (1) est au moins sensiblement plat.

9. Dispositif d'alimentation selon l'une quelconque des revendications précédentes, dans lequel l'espacement entre l'élément de transport d'alimentation (2) et le fond (12) de la goulotte d'alimentation (1) dans la position fermée, est ajustable dans la plage de 5 à 75 mm, de préférence de 10 à 55 mm.

10. Dispositif d'alimentation selon l'une quelconque des revendications précédentes, dans lequel les moyens de transport d'alimentation (8) comprennent un transporteur d'alimentation qui s'étend le long d'au moins une partie de la longueur de l'élément de transport d'alimentation (2) pour transporter l'alimentation par le biais de l'élément de transport d'alimentation (2) jusqu'audit au moins un passage (6), dans lequel le transporteur d'alimentation comprend de préférence une vis de transporteur d'alimentation (8).

11. Dispositif d'alimentation selon l'une quelconque des revendications précédentes, dans lequel, ledit au moins un passage (6) comprend un certain nombre d'ouvertures séparées, qui sont prévues dans la paroi inférieure de l'élément de transport d'alimentation (2) à des intervalles compris entre 0,05 et 0,5 m.

12. Poulailler prévu avec au moins un dispositif d'alimentation selon l'une quelconque des revendications précédentes.

13. Poulailler selon la revendication 12, dans lequel la goulotte d'alimentation (1) dudit au moins un dispositif d'alimentation s'étend le long d'une paroi du poulailler, dans lequel la goulotte d'alimentation (1) peut être approchée par la volaille depuis un côté longitudinal de la goulotte d'alimentation, au moins dans la position d'alimentation, dans lequel au moins un autre dispositif d'alimentation pour volaille est disposé à distance dudit au moins un dispositif d'alimentation, dans lequel ledit au moins un dispositif d'alimentation et ledit au moins un autre dispositif d'alimentation sont séparés par un espace où la volaille peut se tenir, dans lequel, de préférence, ledit au moins un dispositif d'alimentation est conçu pour alimenter des coqs, et ledit au moins un autre dispositif d'alimentation est conçu pour alimenter des poules, en particulier des poules à rôtir.

14. Procédé pour utiliser un dispositif d'alimentation selon l'une quelconque des revendications 1 à 11, comprenant les étapes suivantes consistant à :
a) transporter l'alimentation par l'élément de transport d'alimentation (2) dans une position fermée au moyen des moyens de transport d'alimentation (8), de sorte que l'alimentation sort des éléments de transport d'alimentation (2) à l'emplacement dudit au moins un passage (6) et atterrit au fond (12) de la goulotte d'alimentation (1),
b) faire passer le dispositif d'alimentation dans la position d'alimentation après que l'action de transport a été arrêtée en déplaçant la goulotte d'alimentation (1) et l'élément de transport d'alimentation (2) l'un par rapport à l'autre,
c) permettre à la volaille de manger ladite alimentation,
d) faire passer le dispositif d'alimentation dans la position fermée en déplaçant la goulotte d'alimentation (1) et l'élément de transport d'alimentation (2) l'un par rapport à l'autre, et
e) répéter les étapes a) à d).

15. Procédé selon la revendication 14, dans lequel le réglage de l'espacement entre l'élément de transport d'alimentation (2) et le fond de la goulotte d'alimentation (1) est modifié entre deux étapes d) successives au moyen des moyens d'ajustement (22).
